# FASCICULE DE BREVET EUROPEEN

(11) **EP 4 536 514 B1**
(45) Date de publication et mention de la délivrance du brevet: **15.04.2026**
(21) Numéro de dépôt: 23727629.0
(22) Date de dépôt: 05.05.2023
(51) Int. Cl.: B60R 19/18, B60R 21/34

(54) **ARMATURE DE PARE-CHOCS ADAPTÉE AU CHOC D'UNE TÊTE, POUR UNE FAÇADE AVANT DE VÉHICULE**
STOSSFÄNGERRAHMEN FÜR KOPFAUFPRALL, FÜR DIE VORDERSEITE EINES FAHRZEUGS
BUMPER FRAME DESIGNED FOR HEAD IMPACT, FOR THE FRONT OF A VEHICLE

(30) Priorité: 07.06.2022 FR 2205425
(43) Date de publication de la demande: 16.04.2025
(73) Titulaire: Stellantis Auto SAS, 78300 Poissy (FR)
(72) Inventeur: PERON, Rodolphe, 95220 HERBLAY SUR SEINE (FR); ROYER, Guillaume, 91680 BRUYERES LE CHATEL (FR); BOUDAN, Julien, 91210 DRAVEIL (FR)
(74) Mandataire: BCIP
(86) Numéro de dépôt international: PCT/FR2023/000082
(87) Numéro de publication internationale: WO 2023/237821

(56) Documents cités:
- WO-A1-2011/104853
- WO-A1-2014/183991
- WO-A1-2022/064141
- WO-A1-2022/084603
- DE-A1- 102013 208 981

## Description

### Domaine technique de l'invention

La présente invention revendique la priorité de la demande française 2205425 déposée le 07 juin 2022.

L'invention concerne les façades avant qui sont destinées à équiper des véhicules, et plus précisément les armatures de pare-chocs qui font partie de telles façades avant.

### Etat de la technique

Certains véhicules, généralement de type automobile, comprennent une façade avant comportant une traverse supérieure à laquelle est solidarisé, notamment, un pare-chocs. Plus précisément, la façade avant comprend une traverse supérieure à laquelle est couplée au moins une armature de pare-chocs à laquelle est solidarisée une peau de pare-chocs.

Dans certains véhicules, la paroi supérieure de l'armature de pare-chocs se retrouve située sous la partie avant du capot avant. Par conséquent, lorsque la tête d'une personne entre en collision avec l'extrémité avant (ou « nez ») du capot avant, elle déforme cette dernière par enfoncement, et donc cette extrémité avant vient approximativement épouser la forme locale de la paroi supérieure de l'armature de pare-chocs. Si la partie impactée de la paroi supérieure de l'armature de pare-chocs comprend des arêtes vives et/ou des protubérances saillant vers le haut, l'extrémité avant déformée (du capot avant) va alors comprendre une zone de blocage qui va soumettre la tête à un effort brusque et donc empêcher au moins partiellement la partie centrale du capot avant d'assurer correctement son rôle d'amortisseur progressif du choc. Cela peut alors occasionner une augmentation notable des dommages corporels de la personne, notamment au niveau de la tête et du cou.

Le document WO 2022/084603 décrit une armature de pare-chocs comportant deux surfaces frangibles disposées dans le prolongement de jambes d'appuis.

Le document WO 2022/064141 décrit un support de pare-chocs avant à rupture programmée comportant une ligne frangible sur la deuxième paroi.

La présente invention a notamment pour but d'améliorer la situation.

### Présentation de l'invention

Elle propose notamment à cet effet une armature de pare-chocs propre à équiper une façade avant d'un véhicule et comprenant une paroi supérieure destinée à être placée sous un capot avant du véhicule.

Cette armature de pare-chocs se caractérise par le fait que sa paroi supérieure comprend, dans une partie avant destinée à être placée sous une partie avant du capot avant :
- une sous-partie centrale ayant une forme concave et semi-sphérique propre à permettre à une zone centrale de la partie avant du capot avant de s'enfoncer lors d'un choc d'une tête d'une personne tout en épousant la forme générale de cette tête, et
- une zone fusible entourant une portion arrière de la sous-partie centrale, se prolongeant à droite et à gauche de cette dernière, et propre à se déformer et/ou se rompre en cas d'enfoncement vers l'arrière du véhicule, provoqué par le capot avant, afin de favoriser une déformation du capot avant vers l'arrière du véhicule.

Grâce à l'invention, il n'y a plus de zone de blocage dans la zone de la paroi supérieure qui est initialement impactée, et donc la tête n'est plus soumise à un effort brusque lors de son déplacement vers l'arrière du véhicule, ce qui permet à la partie centrale du capot avant d'assurer correctement son rôle d'amortisseur progressif du choc.

L'armature de pare-chocs selon l'invention peut comporter d'autres caractéristiques qui peuvent être prises séparément ou en combinaison, et notamment :
- la sous-partie centrale peut comprendre dans une partie centrale au moins un trou traversant propre à évacuer du liquide descendant par gravité depuis des zones voisines ;
- en présence de la première option, la partie avant de la paroi supérieure peut comprendre, à droite et à gauche de la sous-partie centrale, des portions inclinées ayant des inclinaisons opposées de manière à contraindre du liquide descendant par gravité depuis des zones voisines à rejoindre la sous-partie centrale ;
- en présence de la dernière sous-option, la partie avant de la paroi supérieure peut comprendre une sous-partie avant inclinée en direction de chacune de ses portions inclinées, afin de contraindre du liquide à descendre par gravité vers ces portions inclinées, et dans laquelle est définie une partie au moins d'une portion avant de la sous-partie centrale ;
- la partie avant de la paroi supérieure peut comprendre une sous-partie convexe entourant la portion arrière de la sous-partie centrale en ayant une forme générale de croissant dépourvu d'arête vive et propre à permettre une remontée de la tête derrière la sous-partie centrale ;
- en présence de la dernière option, la sous-partie convexe peut avoir une forme générale de croissant à surface incurvée vers l'arrière ;
- également en présence de la dernière option, la zone fusible peut définir une extrémité avant inférieure de la sous-partie convexe ;
- la zone fusible peut être agencée sous la forme d'une rainure continue définissant une réduction d'épaisseur de la partie avant de la paroi supérieure. L'invention propose également une façade avant comprenant une traverse supérieure, une peau de pare-chocs, et une armature de pare-chocs du type de celle présentée ci-avant, couplée à la traverse supérieure et à laquelle est couplée la peau de pare-chocs.

L'invention propose également un véhicule, éventuellement de type automobile, et comprenant une façade avant du type de celle présentée ci-avant.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du dessus et du côté avant, une partie d'un exemple de réalisation d'une armature de pare-chocs selon l'invention, destinée à équiper une façade avant d'un véhicule automobile,
[Fig. 2] illustre schématiquement, dans une vue en perspective du dessus et du côté avant et partiellement en coupe au niveau d'une portion inclinée, l'armature de pare-chocs de la figure 1,
[Fig. 3] illustre schématiquement, dans une vue en perspective du dessus et du côté avant et partiellement en coupe au niveau de la sous-partie centrale, l'armature de pare-chocs de la figure 1, et
[Fig. 4] illustre schématiquement, dans une vue en coupe dans un plan longitudinal et vertical passant par la sous-partie centrale, la déformation de la partie avant de la paroi supérieure de l'armature de pare-chocs de la figure 1, lors de l'impact de la tête d'une personne, et la trajectoire prise ensuite par cette tête en sortie de la sous-partie centrale.

### Description détaillée de l'invention

L'invention a notamment pour but de proposer une armature de pare-chocs AP destinée à faire partie d'une façade avant d'un véhicule et adaptée au choc de la tête TP d'une personne sur l'extrémité avant du capot avant de ce véhicule.

On considère dans ce qui suit, à titre d'exemple non limitatif, que la façade avant est destinée à faire partie d'un véhicule de type automobile, comme par exemple une voiture. Mais l'invention n'est pas limitée à ce type de véhicule. En effet, la façade avant peut équiper tout type de véhicule comportant un pare-chocs avant.

Dans ce qui précède et ce qui suit les notions « d'avant » et « d'arrière » sont définies par rapport aux extrémités avant et arrière du véhicule. Par conséquent, une partie avant d'un élément est destinée à être orientée vers l'avant d'un véhicule, tandis qu'une partie arrière d'un élément est destinée à être orientée vers l'arrière de ce même véhicule.

Par ailleurs, dans ce qui précède et ce qui suit les notions de « supérieur » et « inférieur » sont définies par rapport aux capot avant et châssis du véhicule.

Par conséquent, une partie supérieure d'un élément est destinée à être orientée vers le capot avant du véhicule, tandis qu'une partie inférieure d'un élément est destinée à être orientée vers le châssis de ce même véhicule.

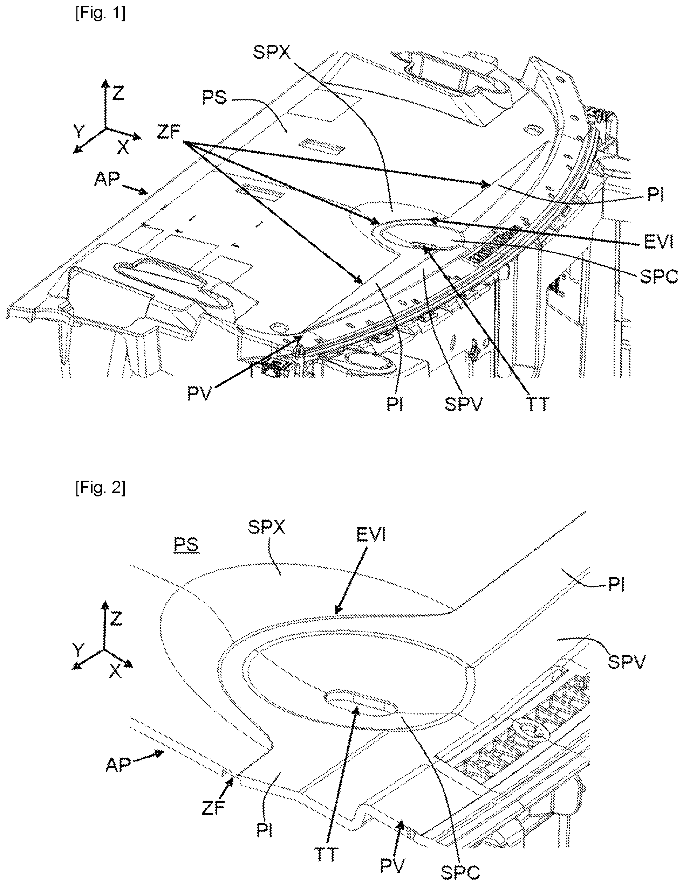

De plus, sur les figures 1 à 4 la direction X est la direction longitudinale du véhicule, laquelle est parallèle aux côtés latéraux (ou longitudinaux) comportant les portières latérales, la direction Y est la direction transversale du véhicule, laquelle est perpendiculaire à la direction longitudinale X, et la direction Z est la direction verticale du véhicule, laquelle est perpendiculaire aux directions longitudinale X et transversale Y.

On a schématiquement illustré sur la figure 1, une partie d'un exemple de réalisation d'une armature de pare-chocs AP destinée à faire partie d'une façade avant d'un véhicule (ici de type automobile).

Il est rappelé que la façade avant comprend notamment une traverse supérieure, destinée à être installée suivant la direction transversale Y du véhicule (perpendiculaire aux côtés latéraux ou longitudinaux), une armature de pare-chocs AP, couplée à cette traverse supérieure, et une peau de pare-chocs (non représentée) qui est solidarisée fixement à l'armature de pare-chocs AP. La façade avant peut aussi éventuellement comprendre une traverse inférieure de pare-chocs (non représentée) couplée à la traverse supérieure (sous cette dernière) et à laquelle est solidarisée fixement la peau de pare-chocs.

Comme illustré, l'armature de pare-chocs AP, selon l'invention, comprend une paroi supérieure PS qui est destinée à être placée sous le capot avant (non illustré) du véhicule, qui contrôle l'accès au compartiment moteur délimité à l'avant par la façade avant.

Cette paroi supérieure PS de l'armature de pare-chocs AP comprend dans une partie avant PV destinée à être placée sous une partie avant du capot avant une sous-partie centrale SPC et une zone fusible ZF.

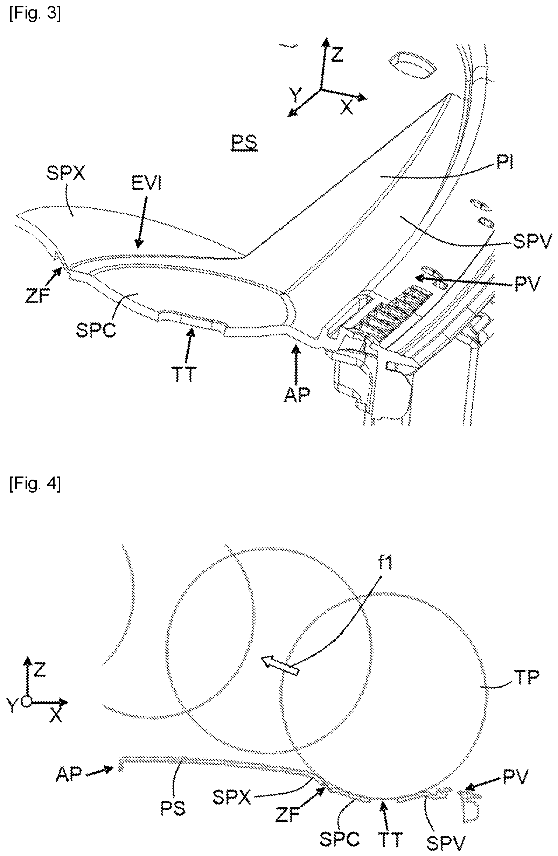

Comme illustré au moins partiellement sur les figures 1, 2 et 4, la sous-partie centrale SPC a une forme concave et semi-sphérique qui est propre à permettre à une zone centrale de la partie avant du capot avant (qui constitue l'extrémité avant (ou nez) de ce dernier) de s'enfoncer lors d'un choc d'une tête TP d'une personne tout en épousant la forme générale de cette tête (voir figure 4).

La zone fusible ZF entoure une portion arrière de la sous-partie centrale SPC et se prolonge à droite et à gauche de cette dernière (SPC). De plus, cette zone fusible ZF est propre à se déformer et/ou se rompre en cas d'enfoncement vers l'arrière du véhicule (provoqué par l'enfoncement du capot avant du fait de la pression exercée dessus par la tête TP se déplaçant de l'avant vers l'arrière), afin de favoriser la déformation du capot avant vers l'arrière du véhicule.

Ainsi, lorsque la tête TP de la personne heurte le nez du capot avant, ce dernier se déforme en s'enfonçant dans la sous-partie centrale SPC (grâce à la concavité de cette dernière (SPC)), puis la tête TP se déplaçant vers l'arrière, elle continue d'enfoncer vers l'arrière le capot avant qui peut continuer à se déformer vers l'arrière du fait que la zone fusible ZF de la partie avant PV de la paroi supérieure PS de l'armature de pare-chocs AP se déforme et/ou se rompt sous la pression exercée par le capot avant. En fait, il n'y a plus de zone de blocage dans la zone de la paroi supérieure PS initialement impactée, et donc la tête TP n'est plus soumise à un effort brusque lors de son déplacement vers l'arrière du véhicule, ce qui permet à la partie centrale du capot avant d'assurer correctement son rôle d'amortisseur progressif du choc. Il en résulte une réduction importante des dommages corporels occasionnés à la personne, notamment au niveau de sa tête et de son cou.

Par exemple, et comme illustré sur les figures 1, 2 et 4, la sous-partie centrale SPC peut comprendre dans une partie centrale au moins un trou traversant TT qui est propre à évacuer du liquide descendant par gravité depuis des zones voisines. Cela est particulièrement avantageux, car cela permet d'éviter la stagnation de liquide, favorable à la génération d'odeurs nauséabondes.

On notera que dans l'exemple illustré sur les figures 1, 2 et 4, la sous-partie centrale SPC ne comprend qu'un seul trou traversant TT dans sa partie centrale, et donc dans le fond de sa cavité, ce qui facilite l'évacuation de liquide collecté et tombé par gravité. Mais elle pourrait comprendre plusieurs trous traversants TT, y compris dans des zones intermédiaires situées entre ses parties supérieure et inférieure.

On notera également que dans l'exemple illustré sur les figures 1, 2 et 4, la partie avant PV de la paroi supérieure PS peut aussi comprendre, à droite et à gauche de la sous-partie centrale SPC, des portions inclinées PI ayant des inclinaisons opposées de manière à contraindre du liquide descendant par gravité depuis des zones voisines à rejoindre la sous-partie centrale SPC. Cela permet avantageusement de guider le liquide vers la sous-partie centrale SPC en vue de son évacuation par chaque trou traversant TT que comprend cette dernière (SPC). On comprendra que la partie gauche de la portion inclinée PI gauche est située à un niveau plus élevé que la partie droite de cette même portion inclinée PI gauche, laquelle communique avec la sous-partie centrale SPC. De même, la partie droite de la portion inclinée PI droite est située à un niveau plus élevé que la partie gauche de cette même portion inclinée PI droite, laquelle communique avec la sous-partie centrale SPC. L'inclinaison a donc ici lieu suivant la direction transversale Y, de l'extérieur vers l'intérieur.

Egalement par exemple, et comme illustré sur les figures 1 à 3, la partie avant PV de la paroi supérieure PS peut comprendre une sous-partie avant SPV qui est inclinée en direction de chacune de ses portions inclinées PI et donc suivant la direction longitudinale X, de l'avant vers l'arrière. Cela permet avantageusement de contraindre le liquide présent sur l'extrémité avant de la paroi supérieure PS à descendre par gravité vers les portions inclinées PI, droite et gauche. De plus, une partie au moins d'une portion avant de la sous-partie centrale SPC est définie dans cette sous-partie avant SPV, ce qui facilite encore plus l'évacuation dans les portions inclinées PI droite et gauche et dans la sous-partie centrale SPC du liquide présent sur la sous-partie avant SPV.

Egalement par exemple, et comme illustré sur les figures 1 à 3, la partie avant PV de la paroi supérieure PS peut comprendre une sous-partie convexe SPX qui entoure la portion arrière de la sous-partie centrale SPC en ayant une forme générale de croissant dépourvu d'arête vive et propre à permettre une remontée de la tête derrière la sous-partie centrale SPC. Cette remontée grâce à la présence de la sous-partie convexe SPX est illustrée sur la figure 4, où elle est matérialisée par la flèche f1. On comprendra que lorsque le capot avant est contraint d'épouser la forme de la sous-partie convexe SPX, située derrière la sous-partie centrale SPC qui est déformée par la déformation et/ou la rupture de la zone fusible ZF, du fait de la pression exercée sur lui par la tête TP de la personne, il comprend une portion montante (en direction de l'arrière du véhicule) qui contraint la tête TP à remonter légèrement (flèche f1), et donc évite qu'elle ne s'enfonce vers le bas. Cela facilite encore plus la déformation du capot avant vers l'arrière, notamment dans sa partie centrale située derrière sa partie avant PV, ce qui lui permet d'assurer encore mieux son rôle d'amortisseur progressif du choc.

Par exemple, et comme illustré sur les figures 1 et 2, la sous-partie convexe SPX peut avoir une forme générale de croissant à surface incurvée vers l'arrière. Cela permet d'éviter de définir dans la sous-partie convexe SPX une arête vive et/ou une protubérance saillant vers le haut de nature à soumettre la tête TP à un effort brusque.

On notera, comme illustré non limitativement sur les figures 1 et 2, que la zone fusible ZF peut définir une extrémité avant inférieure EVI de la sous-partie convexe SPX. Cela permet de faciliter encore plus la remontée de la tête TP juste après la sous-partie centrale SPC.

On notera également, comme illustré non limitativement sur les figures 1 à 3, que la zone fusible ZF peut être agencée sous la forme d'une rainure continue qui définit une réduction d'épaisseur de la partie avant PV de la paroi supérieure PS. Par exemple, cette rainure ZF peut présenter une section de forme générale rectangulaire dans un plan XZ. Mais au lieu d'être agencée sous la forme d'une rainure continue, la zone fusible ZF pourrait être agencée sous la forme d'une suite de trous (de préférence traversants) de manière à définir une zone d'affaiblissement, par exemple.

## Revendications

1. Armature de pare-chocs (AP) propre à équiper une façade avant d'un véhicule et comprenant une paroi supérieure (PS) destinée à être placée sous un capot avant dudit véhicule, **caractérisée en ce que** ladite paroi supérieure (PS) comprend, dans une partie avant (PV) destinée à être placée sous une partie avant dudit capot avant, i) une sous-partie centrale (SPC) ayant une forme concave et semi-sphérique propre à permettre à une zone centrale de ladite partie avant du capot avant de s'enfoncer lors d'un choc d'une tête d'une personne tout en épousant la forme générale de cette tête, et ii) une zone fusible (ZF) entourant une portion arrière de ladite sous-partie centrale (SPC), se prolongeant à droite et à gauche de cette dernière (SPC), et propre à se déformer et/ou se rompre en cas d'enfoncement vers l'arrière dudit véhicule, provoqué par ledit capot avant, afin de favoriser une déformation dudit capot avant vers l'arrière dudit véhicule.

2. Armature de pare-chocs selon la revendication 1, **caractérisée en ce que** ladite sous-partie centrale (SPC) comprend dans une partie centrale au moins un trou traversant (TT) propre à évacuer du liquide descendant par gravité depuis des zones voisines.

3. Armature de pare-chocs selon la revendication 2, **caractérisée en ce que** ladite partie avant (PV) de la paroi supérieure (PS) comprend, à droite et à gauche de ladite sous-partie centrale (SPC), des portions inclinées (PI) ayant des inclinaisons opposées de manière à contraindre du liquide descendant par gravité depuis des zones voisines à rejoindre ladite sous-partie centrale (SPC).

4. Armature de pare-chocs selon la revendication 3, **caractérisée en ce que** ladite partie avant (PV) de la paroi supérieure (PS) comprend une sous-partie avant (SPV) inclinée en direction de chacune de ses portions inclinées (PI), afin de contraindre du liquide à descendre par gravité vers lesdites portions inclinées (PI), et dans laquelle est définie une partie au moins d'une portion avant de la sous-partie centrale (SPC).

5. Armature de pare-chocs selon l'une des revendications 1 à 4, **caractérisée en ce que** ladite partie avant (PV) de la paroi supérieure (PS) comprend une sous-partie convexe (SPX) entourant ladite portion arrière de la sous-partie centrale (SPC) en ayant une forme générale de croissant dépourvu d'arête vive et propre à permettre une remontée de ladite tête derrière ladite sous-partie centrale (SPC).

6. Armature de pare-chocs selon la revendication 5, **caractérisée en ce que** ladite sous-partie convexe (SPX) a une forme générale de croissant à surface incurvée vers l'arrière.

7. Armature de pare-chocs selon la revendication 5 ou 6, **caractérisée en ce que** ladite zone fusible (ZF) définit une extrémité avant inférieure (EVI) de ladite sous-partie convexe (SPX).

8. Armature de pare-chocs selon l'une des revendications 1 à 7, **caractérisée en ce que** ladite zone fusible (ZF) est agencée sous la forme d'une rainure continue définissant une réduction d'épaisseur de ladite partie avant (PV) de la paroi supérieure (PS).

9. Façade avant comprenant une traverse supérieure et une peau de pare-chocs, **caractérisée en ce qu'**elle comprend en outre une armature de pare-chocs (AP) selon l'une des revendications précédentes, couplée à ladite traverse supérieure et à laquelle est couplée ladite peau de pare-chocs.

10. Véhicule, **caractérisé en ce qu'**il comprend une façade avant selon la revendication 9.

## Patentansprüche

1. Stoßfängerarmatur (AP), geeignet zur Ausstattung einer vorderen Fassade eines Fahrzeugs und umfassend eine obere Wand (PS), die dazu bestimmt ist, unter einer vorderen Haube des Fahrzeugs angeordnet zu werden, **dadurch gekennzeichnet, dass** die obere Wand (PS) in einem vorderen Teil (PV), der dazu bestimmt ist, unter einem vorderen Teil der vorderen Haube angeordnet zu werden, i) einen mittleren Unterteil (SPC) mit einer konkaven und halbkugelförmigen Form umfasst, die geeignet ist, einen mittleren Bereich des vorderen Teils der Haube zu ermöglichen, bei einem Aufprall eines Kopfes einer Person einzusinken, während sie sich der allgemeinen Form dieses Kopfes anpasst, und ii) Ein schmelzbarer Bereich (ZF), der einen hinteren Abschnitt des mittleren Teilabschnitts (SPC) umgibt, sich rechts und links von diesem (SPC) erstreckt und geeignet ist, sich zu verformen und/oder zu brechen, wenn das Fahrzeug durch die vordere Abdeckung nach hinten gedrückt wird, um eine Verformung der vorderen Abdeckung nach hinten des Fahrzeugs zu fördern.

2. Stoßfängerarmatur nach Anspruch 1, **dadurch gekennzeichnet, dass** der zentrale Teilabschnitt (SPC) in einem zentralen Abschnitt wenigstens ein Durchgangsloch (TT) aufweist, das geeignet ist, durch Schwerkraft aus benachbarten Bereichen abfallende Flüssigkeit abzulassen.

3. Stoßfängerarmatur nach Anspruch 2, **dadurch gekennzeichnet, dass** der vordere Abschnitt (PV) der oberen Wand (PS) rechts und links von dem zentralen Teilabschnitt (SPC) geneigte Abschnitte (PI) aufweist, die entgegengesetzte Neigungen aufweisen, um Flüssigkeit, die sich von benachbarten Bereichen durch Schwerkraft abwärts bewegt, zu zwingen, sich dem zentralen Teilabschnitt (SPC) anzuschließen.

4. Stoßfängerarmatur nach Anspruch 3, **dadurch gekennzeichnet, dass** der vordere Abschnitt (PV) der oberen Wand (PS) einen vorderen Unterabschnitt (SPV) aufweist, der zu jedem seiner geneigten Abschnitte (PI) geneigt ist, um Flüssigkeit zu veranlassen, durch Schwerkraft in Richtung auf die geneigten Abschnitte (PI) abzusinken, und wobei wenigstens ein Abschnitt eines vorderen Abschnitts des zentralen Unterabschnitts (SPC) definiert ist.

5. Stoßfängerarmatur nach einem der Ansprüche 1 bis 4, **dadurch gekennzeichnet, dass** der vordere Teil (PV) der oberen Wand (PS) einen konvexen Unterteil (SPX) umfasst, der den hinteren Teil des mittleren Unterteils (SPC) umgibt und eine allgemeine Halbmondform aufweist, die keine scharfe Kante aufweist und geeignet ist, ein Anheben des Kopfes hinter dem mittleren Unterteil (SPC) zu ermöglichen.

6. Stoßfängerarmatur nach Anspruch 5, **dadurch gekennzeichnet, dass** der konvexe Teilabschnitt (SPX) eine allgemein nach hinten gekrümmte Halbmondform aufweist.

7. Stoßfängerarmatur nach Anspruch 5 oder 6, **dadurch gekennzeichnet, dass** der schmelzbare Bereich (ZF) ein unteres vorderes Ende (EVI) des konvexen Teilabschnitts (SPX) definiert.

8. Stoßfängerarmatur nach einem der Ansprüche 1 bis 7, **dadurch gekennzeichnet, dass** die Schmelzzone (ZF) in Form einer durchgehenden Nut angeordnet ist, die eine Dickenreduktion des vorderen Teils (PV) der oberen Wand (PS) definiert.

9. Vorderseite mit einem oberen Querträger und einer Stoßstangenhaut, **dadurch gekennzeichnet, dass** sie ferner eine Stoßstangenbewehrung (AP) nach einem der vorhergehenden Ansprüche aufweist, die mit dem oberen Querträger gekoppelt ist und mit der die Stoßstangenhaut gekoppelt ist.

10. Fahrzeug, **dadurch gekennzeichnet, dass** es eine vordere Fassade nach Anspruch 9 umfasst.

## Claims

1. A bumper frame adapted to be fitted to a front panel of a vehicle and comprising an upper wall adapted to be placed under a front hood of said vehicle, wherein said upper wall comprises, in a front part adapted to be placed under a front part of said front hood, i) a central sub-part having a concave and semi-spherical shape adapted to allow a central zone of said front part of the hood to be driven in during an impact of a person's head while conforming to the general shape of this head, and ii) a fusible zone (ZF) surrounding a rear portion of said central sub-part (SPC), extending to the right and to the left of the latter (SPC), and adapted to be deformed and/or ruptured in the event of a drive towards the rear of said hood front, in order to promote a deformation of said front hood towards the rear of said vehicle.

2. Bumper frame according to claim 1, wherein said centre sub-part (SPC) comprises in a centre part at least one through-hole (TT) adapted to discharge downward liquid by seriousness from adjacent zones.

3. Bumper frame according to claim 2, wherein said front part (PV) of the upper wall (PS) comprises, to the right and to the left of said central sub-part (SPC), inclined portions (PI) having opposite inclinations so as to constrain liquid descending by seriousness from neighbouring zones to join said central sub-part (SPC).

4. Bumper frame according to claim 3, wherein said front portion (PV) of the upper wall (PS) comprises a front sub-portion (SPV) inclined in management with each of its inclined portions (PI), in order to force liquid to descend by seriousness towards said inclined portions (PI), and in which is defined a portion at least of a front portion of the centre sub-portion (SPC).

5. Bumper frame according to one of claims 1 to 4, wherein said front part (PV) of the upper wall (PS) comprises a convex sub-part (SPX) surrounding said rear portion of the centre sub-part (SPC), having a general crescent shape without a sharp edge and capable of allowing said head to rise behind said centre sub-part (SPC).

6. Bumper frame according to claim 5, wherein said convex sub-part (SPX) is generally crescent-shaped with a surface curved towards the rear.

7. Bumper frame according to claim 5 or 6, **characterised in that** said fusible zone (ZF) defines a lower front end (EVI) of said convex sub-part (SPX).

8. Bumper frame according to one of claims 1 to 7, **characterised in that** said fusible zone (ZF) is arranged in the form of a continuous groove defining a reduction in thickness of said front part (PV) of the upper wall (PS).

9. Front panel comprising an upper cross-member and a bumper skin, further comprising a bumper reinforcement according to one of the previous claims, coupled to said upper cross-member and to which said bumper skin is coupled.

10. Vehicle, **characterised in that** it comprises a front panel according to claim 9.
